# EUROPÄISCHE PATENTANMELDUNG

(11) **EP 2 962 897 A2**
(43) Veröffentlichungstag der Anmeldung: **06.01.2016**
(21) Anmeldenummer: 15155274.2
(22) Anmeldetag: 16.02.2015
(51) Int. Cl.: B60P 7/08

(54) **Ladeboden für ein Kraftfahrzeug**

(30) Priorität: 02.07.2014 DE 102014212868
(71) Anmelder: Volkswagen Aktiengesellschaft, 38440 Wolfsburg (DE)
(72) Erfinder: Gaas, Matthias, 38442 Wolfsburg (DE)

(57) **Zusammenfassung**

Die Erfindung betrifft einen Ladeboden für ein Kraftfahrzeug, umfassend ein plattenartig erstrecktes Bodenteil (1) zur Aufnahme von Gepäcklasten, eine karosseriefest angeordnete Lastschiene (7), und eine neben der Lastschiene (7) erstreckte Führungsbahn (3) zur Abstützung eines Randbereiches (2) des Bodenteils (1),wobei die Führungsbahn (3) eine untere, den Randbereich tragende Bahnhälfte (5) und eine hiervon separate obere, den Randbereich überdeckende Bahnhälfte (5) umfasst.

## Beschreibung

Die Erfindung betrifft einen Ladeboden für ein Kraftfahrzeug nach dem Oberbegriff des Anspruchs 1 sowie ein Kraftfahrzeug mit einem erfindungsgemäßen Ladeboden.

DE 10 2004 001 367A1 beschreibt einen Ladeboden für ein Kraftfahrzeug, bei dem ein plattenförmiges Bodenteil mit seinem Rand auf eine seitliche, untere Abkragung einer Lastschiene aufgelegt ist.

Es ist die Aufgabe der Erfindung, einen Ladeboden für ein Kraftfahrzeug anzugeben, der einfach und flexibel aufgenommen ist.

Diese Aufgabe wird für einen eingangs genannten Ladeboden erfindungsgemäß mit den kennzeichnenden Merkmalen des Anspruchs 1 gelöst. Durch die zweiteilige Ausbildung der Führungsbahn kann der Rand des Ladebodens vollständig umfangen werden. Bevorzugt weisen die untere und die obere Hälfte der Führungsschiene insgesamt eine U-förmigen Querschnitt mit horizontal gerichteter Öffnung aus. Die separierte Ausbildung der Hälften der Führungsschienen im Sinne der Erfindung bedeutet, dass die Hälften nicht einstückig, insbesondere nicht materialeinheitlich einstückig, ausgebildet sind.

Bei einer bevorzugten Ausführungsform der Erfindung ist die obere Bahnhälfte als Teil der Lastschiene ausgebildet. Hierdurch wird die Anzahl separater Teile verringert. Weiter vorteilhaft ist die obere Bahnhälfte im Interesse einer einfachen Realisierung als im Wesentlichen L-förmiger Bereich mit einem horizontal vorragenden Schenkel ausgeformt. Die Lastschiene kann allgemein bevorzugt als Aluminiumteil ausgebildet sein, zum Beispiel als extrudiertes Aluminiumprofil.

Allgemein vorteilhaft ist die untere Bahnhälfte durch ein karosseriefest angeordnetes Aufnahmeglied ausgebildet. Dabei kann es sich zum Beispiel um ein Kunststoffteil handeln, das an einer Karosserie des Fahrzeugs festgelegt ist. Dies ermöglicht insgesamt eine je nach Anforderungen beliebige Formgebung der unteren Bahnhälfte.

Bei einer vorteilhaften Weiterbildung ist das Aufnahmeglied mit der Lastschiene unmittelbar verbunden. Besondres bevorzugt kann dabei das Aufnahmeglied in eine entlang der Lastschiene erstreckte Nut formschlüssig eingreifen. Insgesamt ist hierdurch eine einfache und effektive Versteifung der Anordnung erreicht.

Zur flexiblen Positionierung des Ladebodens kann der Randbereich des Bodenteils einen Kulissenstein umfassen, der in die Führungsbahn eingreift. Dies ermöglicht auch eine reibungsarme Bewegbarkeit des Ladebodens in der Führungsbahn.

Allgemein vorteilhaft ist der Ladeboden in der Führungsbahn in Fahrzeuglängsrichtung verschiebbar ausgebildet. Dabei kann besonders bevorzugt die untere Bahnhälfte einen nach unten geöffneten Abschnitt zur Absenkung des Bodenteils aufweisen. Durch diese Weiterbildung ist eine flexible, unterschiedliche Anordnung des Ladebodens auch in der senkrechten Richtung ermöglicht. Insbesondere kann die Führungsbahn dabei eine erste, obere Ebene und eine darunter liegende zweite Ebene aufweisen.

Es versteht sich allgemein, dass die Anordnung von Lastschiene und Führungsbahn bezüglich einer Fahrzeugmitte gespiegelt sein kann, so dass das Bodenteil an zwei gegenüberliegenden Randbereichen gehalten wird.

Die Erfindung betrifft zudem ein Kraftfahrzeug, bevorzugt einen Personenkraftwagen, umfassend einen erfindungsgemäßen Ladeboden.

Weitere Vorteile und Merkmale der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
Fig. 1 zeigt eine schematische Schnittansicht eines Ladebodens gemäß der Erfindung.
Fig. 2 zeigt eine Draufsicht auf ein Aufnahmeglied des Ladebodens aus Fig. 1 von der Seite.
Fig. 3 zeigt eine Schnittansicht des Ladebodens aus Fig. 1 entlang der Linie A-A aus Fig. 2.
Fig. 4 zeigt eine Draufsicht auf eine Lastschiene des Ladebodens aus Fig. 1.
Fig. 5 zeigt eine Schematische Schnittansicht des Ladebodens aus Fig. 1 in einer angekippten Position eines Bodenteils.

Ein Ladeboden eines Kraftfahrzeugs gemäß der vorliegenden Erfindung umfasst ein Bodenteil 1 mit seitlichen Randbereichen, die in Fahrzeuglängsrichtung erstreckt sind. An den Randbereichen sind seitlich vorragende Kulissensteine 2 angeordnet, die in eine in Fahrzeuglängsrichtung erstreckte Führungsbahn 3 eingreifen.

Die Führungsbahn 3 hat im Wesentlichen einen U-förmigen Querschnitt, der horizontal in Richtung des abgestützten Bodenteils 1 geöffnet ist. Die Führungsbahn 3 hat eine erste, obere Bahnhälfte 4 und eine zweite, untere Bahnhälfte 5.

Die untere Bahnhälfte 5 trägt den Ladeboden über die Kulissensteine 1 und ist als Abschnitt eines Aufnahmeglieds 6 ausgebildet. Das Aufnahmeglied 6 ist als Kunststoff-Formteil an einer Karosserie des Fahrzeugs festgelegt.

Die obere Bahnhälfte 4 der Führungsbahn 3 ist als Teil einer Lastschiene 7 ausgeformt, die als Aluminiumprofil ausgebildet ist. Die Lastscheine 7 hat auf bekannte Weise nach oben gerichtete Öffnungen 7a zur Festlegung von Sicherungsgliedern (nicht dargestellt) zur Ladungssicherung. Die Lastschiene 7 ist über ein Halteglied 8 mit der Karosserie des Fahrzeugs fest verbunden.

Ein Schenkel 4a des Profils der Lastschiene 7 ragt horizontal über die Kulissensteine 2 des Bodenteils 1 vor, so dass ein Hochnehmen des Bodenteils 1 zumindest in einigen Positionen blockiert ist.

Ein Steg 6a des Bodenteils 6 ragt in eine Nut 7b der Lastschiene 7, so dass Bodenteil und Lastschiene zumindest in einer Raumrichtung eine unmittelbare, formschlüssige Verbindung haben.

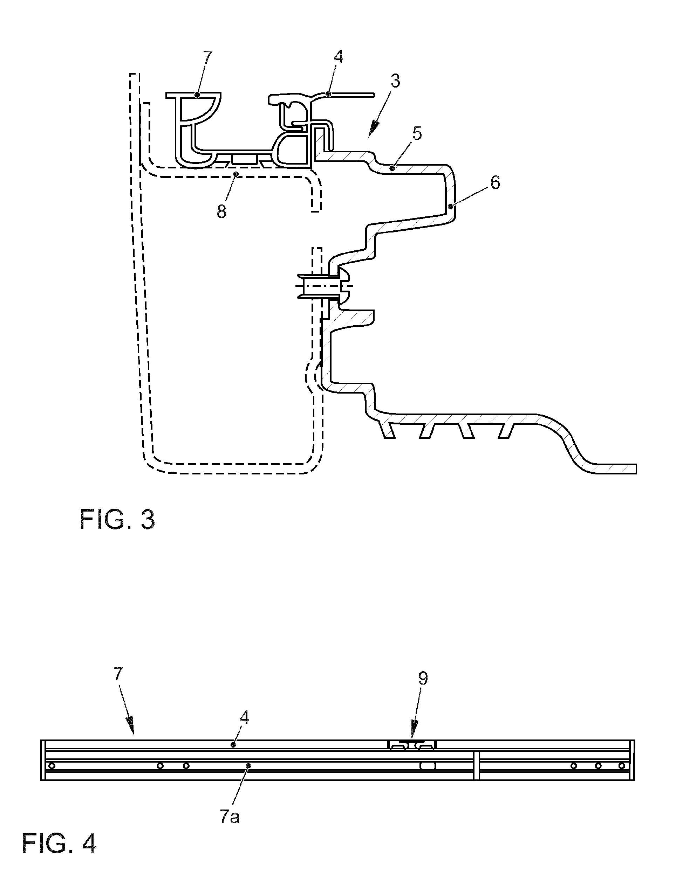

Das Bodenteil 1 ist in Fahrzeuglängsrichtung in der Führungsbahn 3 verschiebbar aufgenommen. Ein Anschlag 9 ist an der Führungsbahn in der Lastschiene 7 festgelegt (siehe Fig. 4), um die Bewegung zu begrenzen.

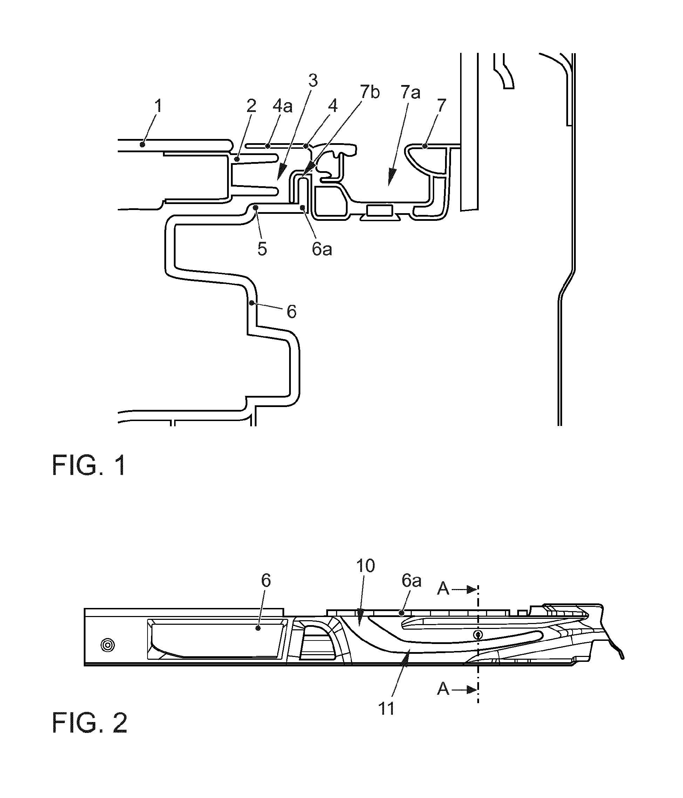

Die untere Hälfte 5 der Führungsbahn 3 hat einen ersten, oberen Abschnitt in einer oberen Ebene, in dem sie parallel zu der Lastschiene verläuft. Ferner hat die untere Hälfte 5 eine Öffnung 10 und einen zweiten, unteren Abschnitt 11, der einen gebogenen Verlauf unterhalb des ersten Abschnitts beschreibt (siehe Fig. 2) und eine Verlagerung des Bodenteils in eine untere Ebene ermöglicht.

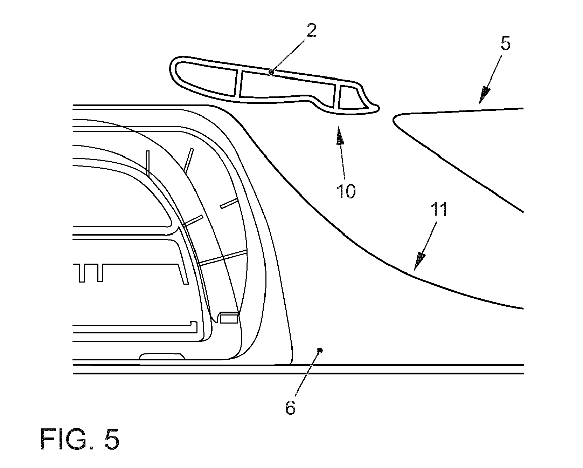

Die Erfindung funktioniert nun wie folgt:
Ausgehend von einer oberen Grundposition kann das Bodenteil 1 entgegen der Fahrtrichtung nach hinten verschoben werden, bis der Kulissenstein 2 an den Anschlag 9 stößt. In Fig. 2 verläuft die Fahrtrichtung von links nach rechts. Die Position des Kulissensteins in Fig. 5 markiert in etwa ein in Fahrtrichtung vorderes Ende des Bodenteils.

In dieser Position kann ein heckseitiges Ende des Bodenteils 1 angehoben werden, so dass der längliche Kulissenstein gemäß der Darstellung in Fig. 5 angekippt ist. In dieser angekippten Position kann der Kulissenstein 2 durch die Öffnung 10 in den unteren Abschnitt 11 der unteren Hälfte der Führungsbahn eintreten. Ein nachfolgendes Verschieben des Bodenteils in Fahrtrichtung führt zu einer entsprechenden Absenkung des Bodenteils. Hierdurch kann das Volumen eines Gepäckraums des Fahrzeugs bei Bedarf vergrößert werden.

## Patentansprüche

1. Ladeboden für ein Kraftfahrzeug, umfassend
ein plattenartig erstrecktes Bodenteil (1) zur Aufnahme von Gepäcklasten,
eine karosseriefest angeordnete Lastschiene (7), und
eine neben der Lastschiene (7) erstreckte Führungsbahn (3) zur Abstützung eines Randbereiches (2) des Bodenteils (1),
**dadurch gekennzeichnet,**
**dass** die Führungsbahn (3) eine untere, den Randbereich (2) tragende Bahnhälfte (5) und eine hiervon separate obere, den Randbereich (2) überdeckende Bahnhälfte (4) umfasst.

2. Ladeboden nach einem der vorhergehenden Ansprüche, **dadurch gekennzeichnet, dass** die obere Bahnhälfte (4) als Teil der Lastschiene (7) ausgebildet ist.

3. Ladeboden nach Anspruch 2, **dadurch gekennzeichnet, dass** die Lastschiene (7) als Profilteil ausgebildet ist, wobei die obere Bahnhälfte (4) als im Wesentlichen L-förmiger Bereich mit einem horizontal vorragenden Schenkel (4a) ausgeformt ist.

4. Ladeboden nach Anspruch 1, **dadurch gekennzeichnet, dass** die untere Bahnhälfte (5) durch ein karosseriefest angeordnetes Aufnahmeglied (6) ausgebildet ist.

5. Ladeboden nach Anspruch 4, **dadurch gekennzeichnet, dass** das Aufnahmeglied (6) mit der Lastschiene (7) unmittelbar verbunden ist.

6. Ladeboden nach Anspruch 5, **dadurch gekennzeichnet, dass** das Aufnahmeglied (6) in eine entlang der Lastschiene (7) erstreckte Nut (7b) formschlüssig eingreift.

7. Ladeboden nach einem der vorhergehenden Ansprüche, **dadurch gekennzeichnet, dass** der Randbereich des Bodenteils (1) einen Kulissenstein (2) umfasst, der in die Führungsbahn (3) eingreift.

8. Ladeboden nach einem der vorhergehenden Ansprüche, **dadurch gekennzeichnet, dass** der Ladeboden in der Führungsbahn (3) verschiebbar ist.

9. Ladeboden nach Anspruch 8, **dadurch gekennzeichnet, dass** die untere Bahnhälfte (5) einen nach unten geöffneten Abschnitt (11) zur Absenkung des Bodenteils (1) aufweist.

10. Kraftfahrzeug, insbesondere Personenkraftwagen, umfassend einen Ladeboden nach einem der vorhergehenden Ansprüche.
